(19) **Europäisches Patentamt**

**European Patent Office**

**Office européen des brevets**

(11) **EP 1 348 542 A1**

(12) **EUROPÄISCHE PATENTANMELDUNG**

(43) Veröffentlichungstag:
01.10.2003 Patentblatt 2003/40

(51) Int Cl.⁷: **B32B 27/40**, C08G 18/76,
C08G 73/10, C08G 18/46

(21) Anmeldenummer: 03004615.5

(22) Anmeldetag: **01.03.2003**

(84) Benannte Vertragsstaaten:
**AT BE BG CH CY CZ DE DK EE ES FI FR GB GR**
**HU IE IT LI LU MC NL PT RO SE SI SK TR**
Benannte Erstreckungsstaaten:
**AL LT LV MK**

(30) Priorität: **25.03.2002 AT 4562002**

(71) Anmelder: INTUMEX GmbH
A-4021 Linz (AT)

(72) Erfinder: **Horacek, Heinrich**
**4040 Linz (AT)**

(74) Vertreter: **Lindinger, Ingrid**
**DSM Fine Chemicals Austria Nfg GmbH & Co KG,**
**CEL/Patente,**
**St. Peter-Strasse 21**
**4021 Linz (AT)**

(54) **Brandgeschützte Polyisocyanurat-, Polyisocyanuratimid- oder Polyimid-Schaumstoffenthaltende Verbundsysteme**

(57) Schaumstoffenthaltende Verbundsysteme, die aus einem Polyisocyanurat-B1-, Polyisocyanuratimid-B1- oder Polyimid-B-1-Schaumstoff bestehen, der mit intumeszierenden oder ablativen Dämmschichtbildnern als Deckschicht und gegebenenfalls Zwischenschicht versehen ist, deren Herstellung und Verwendung.

**Beschreibung**

Die Erfindung betrifft brandgeschützte Polyisocyanurat-(PIR)-B1-, Polyisocyanuratimid-B1- oder Polyimid-B1-Schaumstoff-enthaltende Verbundsysteme, sogenannte Sandwichplatten, die mit intumeszierenden oder ablativen Dämmschichtbildnern als Deckschicht und gegebenenfalls Zwischenschichten versehen sind, deren Herstellung und Verwendung.

Schaumstoffenthaltende Verbundsysteme oder Mineralwollplatten werden beispielsweise als Wärme- und Schallschutzisolierungen, bei Türblättern, Trennwänden, Paneelen und Deckenelementen, besonders an Gebäuden und in Fahrzeugen eingesetzt und sind in vielen Variationen erhältlich. So sind beispielsweise Sandwichplatten mit einem Schaumstoffkern und Deckschichten aus den verschiedensten Materialien, wie etwa Aluminium, Stahl, glasfaserverstärkte Kunststoffe oder Kunststofflaminaten bekannt. Zum Brandschutz von Sandwichplatten ist es bisher üblich deren Oberfläche mit flammhemmenden oder intumeszierenden Beschichtungen, beispielsweise Anstrichen oder Folien, zu versehen oder die Schaumstoffe zu tränken. Weiters sind Verbundbauteile aus Metalldeckschichten, PUR-Kleber und Mineralwolle bekannt, die beispielsweise bei einem Raumgewicht von 120 kg/m$^3$ und einer Dicke von 10 cm eine Brandwiderstandsdauer von F90 aufweisen.

Aus EP 0 832 735 sind weiters schaumstoffenthaltende Verbundsysteme bekannt, die aus einem thermoplastischen Schaumstoff aus der Gruppe geschäumtes Polystyrol, Polyolefine, Polyvinylchlorid, vernetztes Polyurethan, sowie Melamin-, Phenolund Harnstoff-Formaldehydharz bestehen, wobei die Schaumstoffschicht an den Rändern, an der Oberfläche und/oder im Inneren als Raumteiler mit Profilen, Geweben oder Netzen versehen ist, welche mit einer intumeszierenden Masse getränkt oder beschichtet sind.

Zur Herstellung von Weichschotts aus Mineralwollplatten ist es auch bekannt, diese beidseitig mit intumeszierenden oder ablativen Dämmschichtbildnern als Deckschichten auszurüsten. (Promat-Handbuch: Bautechnischer Brandschutz A-1: Promat-Konstruktionen 600.40, 600.44, 600.45)

Die Nachteile bisher bekannter Sandwichplatten sind deren Brennbarkeit bei Schaumstoffen aus Polystyrol, Polyolefinen und Polyurethanen. Bei PVC beschränkt die niedrige Glastemperatur von 80°C die Einsatzmöglichkeit. Phenol-Formaldehyd-Schaumstoffe sind spröde und Phenol ist toxisch. Harnstoff-Formaldehyd-Schaumstoffe sind teilweise offenzellig und zeigen eine unerwünschte Wasseraufnahme, sowie Schrumpf. Melamin-Formaldehyd-Schaumstoffe sind in der Literatur nur wenig beschrieben. Sie zeigen aufgrund ihrer Offenzelligkeit und geringem Raumgewicht eine nur kurze Brandwiderstandszeit.

Aufgabe der Erfindung war es daher Sandwichplatten zu finden, die eine gegenüber dem Stand der Technik höhere Brandwiderstandszeit, leichteres Gewicht, angenehme und zeitsparende Verarbeitung aufweisen, die als Feuerbarriere als Deckenelement, Trennwand, Türblatt oder als sogenannter Weichschott verwendet werden können.

Unerwarteterweise wurde diese Aufgabe durch die Verwendung von PIR-B1- oder Polyisocyanuratimid-B1-Schaumstoffen aus Diphenylmethan-4,4'-diisocyanat und halogen- und/oder phosphorhaltigen Polyolen oder von Polyimid-B1-Schaumstoffen gelöst werden, die mit intumeszierenden oder ablativen Dämmschichtbildnern als Deckschichten und gegebenenfalls Zwischenschichten versehen sind und die als Türblatt, Trennwand, Paneele, Deckenelement und als Weichschott Verwendung finden.

Gegenstand der Erfindung sind demnach schaumstoffenthaltende Verbundsysteme, die dadurch gekennzeichnet sind, dass sie aus einem Polyisocyanurat-B1-, Polyisocyanuratimid-B1- oder Polyimid-B1-Schaumstoff bestehen, der mit intumeszierenden oder ablativen Dämmschichtbildnern als Deckschicht und gegebenenfalls Zwischenschichten versehen ist.

Für die erfindungsgemäßen schaumstoffenthaltenden Verbundsysteme, bzw. Sandwichplatten wird ein PIR-, Polyisocyanuratimid- oder Polyimid(PI)-Schaumstoff der Brandklasse B1 nach DIN 4102 verwendet.

Die erfindungsgemäß eingesetzten Schaumstoffe weisen Isocyanuratringe und/oder Imidgruppen auf, sodass das Verhältnis von Isocyanurat:Imidgruppen von 0 bis 1 betragen kann und demgemäß PIR-, Polyisocyanuratimid- oder PI-Schaumstoffe eingesetzt werden.

Die erfindungsgemäß eingesetzten PIR-B1-Schaumstoffe werden aus Diphenylmethan-4,4'-diisocyanat (MDI) (Isocyanat- oder B-Komponente) und halogenund/oder phosphorhaltigen Polyolen (Polyol- oder A-Komponente) hergestellt.

Als Polyole kommen dabei halogen- und oder phosphorhaltige Polyetherpolyole, wie etwa alkoxylierte Hydroxypolyether oder Polyester, wie etwa Umsetzungsprodukte aus Dicarbonsäuren mit Phosphordiolen und/oder Chlorpolyolen oder Gemische derselben in Frage.

Bevorzugt werden Polyester aus Bis(Octachlorphenyl-hydroxyethylamin) mit Adipinsäure, besonders bevorzugt mit 45% Halogengehalt und einer OH-Zahl von 56, oder aus 2,2-Bis(Bromomethyl-1,3-propandiol) und Bernsteinsäure, besonders bevorzugt mit einem Bromgehalt von 47% und einer OH-Zahl von 100, oder deren Gemische eingesetzt.

Als Polyetherpolyol werden bevorzugt solche eingesetzt, die eine OH-Zahl über 200 aufweisen. Besonders bevorzugt sind Phosphordiole, wie Desmophen 4090N (Fa. Bayer) mit 12% Phosphor und einer OH-Zahl von 440 oder Halogenpolyole, wie Ixol B 251 (Fa. Solvay) mit 38% Halogengehalt und einer OH-Zahl von 330, Ixol M 125 mit 39% Halogengehalt und einer OH-Zahl von 239, oder Foxopol VD 280S (Fa. Resina Chemie) mit 27% Halogengehalt und einer OH-Zahl von 280.

Bei den Polyisocyanuratimid-B1-Schaumstoffen liegt sowohl eine Isocyanurat- als auch die Imidstruktur vor. Die Imidstruktur kann durch die Polyolkomponente (A-Komponente) oder durch die Isocyanatkomponente (B-Komponente) eingeführt werden. So kann beispielsweise der B-Komponente ein Tetracarbonsäureanhydrid oder -dianhydrid zugesetzt werden, wodurch Imidoisocyanate erhalten werden. Geeignete Tetracarbonsäureanhydride oder -dianhydride sind beispielsweise Pyromellitsäuredianhydrid, Benzophenontetracarbonsäuredianhydrid, Oxodiphthalsäureanhydrid, Hexafluoropropandiphthalsäureanhydrid, Sulfondiphthalsäureanhydrid, u.s.w.. Bevorzugt sind Addukte aus Pyromellitsäuredianhydrid oder Benzophenontetracarbonsäuredianhydrid mit jeweils 2 MDI.

Wird die Imidstruktur über die A-Komponente eingeführt, so wird dem entsprechenden Polyol ein Imidodiol zugesetzt. Geeignete Imidodiole werden als Umsetzungsprodukte von Aminoalkoholen, wie etwa Hydroxy-$C_2$-$C_6$- alkylamine, beispielsweise Hydroxyethylamin, mit Tetracarbonsäureanhydriden, wie etwa Pyromellitsäuredianhydrid oder Benzophenontetracarbonsäuredianhydrid Oxodiphthalsäureanhydrid, Hexafluoropropandiphthalsäureanhydrid, Sulfondiphthalsäureanhydrid, u.s.w., erhalten.

Bevorzugt sind Imidodiole aus 2 Hydroxyethylaminen mit Pyromellitsäuredianhydrid, die eine OH-Zahl von 37 aufweisen, oder mit Benzophenontetracarbonsäuredianhydrid, die eine OH-Zahl von 27 aufweisen.

Geeignete Polyimidschaumstoffe werden aus einem Tetracarbonsäureanhydrid, wie etwa Pyromellitsäuredianhydrid oder Benzophenontetracarbonsäuredianhydrid Oxodiphthalsäureanhydrid, Hexafluoropropandiphthalsäureanhydrid, Sulfondiphthalsäureanhydrid,u.s.w., mit aromatischen Diaminen, wie etwa Methylendianilin, Pyridindiamine, 2,4-Toluoldiamin, 2,6-Toluoldiamin, p- oder o-Phenylendiamine u.s.w., hergestellt.

Die Herstellung der PIR- und der Polyisocyanuratimid-Schaumstoffe kann durch übliche Verfahrenstechniken, wie etwa durch das One-shot-Verfahren (Einstufenverfahren), bei welchem Isocyanat und Polyol direkt vermischt werden, oder durch das Prepolymerverfahren (Zweistufenverfahren), bei welchem ein Prepolymer mit Isocyanatgruppen und Polyol vermischt werden.

Bevorzugt werden die erfindungsgemäß eingesetzten PIR-B1- und Polyisocyanuratimid-B1-Schaumstoffe durch das One-shot-Verfahren hergestellt.

Die Umsetzung erfolgt dabei in Anwesenheit von PIR-Katalysatoren, die die PIR- und PUR-Reaktion so steuern, dass weder ein Schaumkollaps noch ein Aufreißen des Schaumes eintritt. Geeignete PIR-Katalysatoren sind beispielsweise Tris-(dimethylaminopropyl)-sym-hexahydrotriazin, wie etwa Polycat 60 (Abbott), Kalium-2-Ethylhexoat, Kalium-octoat, wie etwa T-45 (M+T International), Amin-haltige Katalysatoren, wie Polycat 41 (Abbott), Dabco TMR (Air Products), Dabco TMR-2 (Air Product), 2-Dimethyl-aminomethylphenol, wie etwa DMP 10, 2,4,6-Tris-(dimethylaminomethyl)phenol, wie etwa DMP 30 (Rohm u. Haas), u.s.w..

Der Polyolkomponente werden dabei noch übliche Zusätze, wie Vernetzer, Kettenverlängerer, Emulgatoren, Treibmittel, Schaumstabilisatoren, Flammhemmer oder Füllstoffe in üblichen Mengen zugesetzt.

Geeignete Vernetzer sind beispielsweise Glycerin, Trimethylolpropan, Pentaerythrit, Dipentaerythrit, Sorbitol u.s.w..

Als Kettenverlängerer eignen sich beispielsweise Ethylenglykol, 2,2-Bis(Bromomethyl)-1,3-propandiol, Propylenglykol, Diethylenglykol, u.s.w.., sowie Imidodiole im Falle der Polyisocyanuratimid-Schaumstoffe.

Geeignete Emulgatoren sind beispielsweise Ricinusöl, Polyethermonosulfonate, wie etwa Tegomer HS 3127 (Fa. Goldschmidt), u.s.w..

Als Treibmittel können beispielsweise $C_1$-$C_5$-Kohlenwasserstoffe, wie etwa n-Pentan, Trichlorofluormethan, Dimethylether, u.s.w..

Geeignete Schaumstabilisatoren sind beispielsweise Alkylsiloxan-polyoxyalkylencopolymere, Polyether Polysiloxan, Silikonöl, u.s.w..

Als Flammhemmer sind beispielsweise Chlorphosphat-Mischungen, Trichlorpropylphosphat, Trichlorethylphosphat, Ammoniumpolyphosphat, roter Phosphor, V-Graphit, Ethylendiaminphosphat, Melaminphosphat, Zinkborat, Borphosphat, Ammoniumpentaborat, u.s.w. geeignet.

Füllstoffe, die für die erfindungsgemäße Zusammensetzung eingesetzt werden können sind beispielsweise ATH, Titandioxid, Kreide, Aluminiumphosphate, $Mg(OH)_2$, Talkum, Titandioxid, Zeolithe, Schwerspat, u.s.w.

Der B-Komponente werden gegebenenfalls ebenfalls übliche Zusätze wie etwa Treibmittel, Stabilisatoren, Polyole oder ein Tetracarbonsäureanhydrid zur Präpolymerbildung, u.s.w. in üblichen Mengen zugesetzt.

Als Treibmittel kommen wiederum beispielsweise $C_1$-$C_5$-Kohlenwasserstoffe, wie etwa n-Pentan, Trichlorofluormethan, Dimethylether, Methylchlorid, u.s.w. in Frage. Geeignete Stabilisatoren für die Isocyanatkomponente sind beispielsweise Benzoylchlorid u.s.w..

Als Polyol zur Präpolymerbildung eignen sich vor allem Diole, wie etwa Ethylenglykol, Propylenglykol u.s.w..

Die B-Komponente und die Polyolkomponente werden dabei in einem solchen Verhältnis vermischt, dass ein Isocyanatindex von mindestens 250%, bevorzugt von mindestens 300% erhalten wird.

Methoden zur Herstellung reiner Polyimidschaumstoffe sind beispielsweise in EP 0 110 723 beschrieben.

Geeignete Polyimidschaumstoffe sind beispielsweise auch käuflich erwerbbar, wie etwa Polyimid 2080 (Upjohn), Skybond (Monsanto) oder Solimid (Imi-Tech Corp.)

Die erfindungsgemäß verwendeten B1-Schaumstoffe weisen ein Raumgewicht von 15 bis 200g/l, bevorzugt von 20 bis 100 g/l, auf.

Die Schaumstoffe werden sodann in die gewünschte Endform geschnitten und erfindungsgemäß mit intumeszierenden oder ablativen Dämmschichtbildnern als Deckschichten und gegebenenfalls Zwischenschichten versehen.

Als intumeszierende Dämmschichtbildner eignen sich beispielsweise intumeszierende Lacke aus Polyol, Ammoniumpolyphosphat und Amiden, intumeszierende Klarlacke aus Phosphorsäure-Polyolester und Hexamethylmethoxymelamin, die unter Feuereinwirkung aufschäumen, sowie Wasserglas, V-Graphit-Dispersionen in Polyvinylacetat, Polychloropren, SBR-Dispersionen oder PVC.

Geeignete ablative Dämmschichtbildner sind flammhemmende, kühlende Anstriche mit einem hohen Gehalt an wasserabspaltenden Verbindungen, wie etwa Aluminiumhydroxyd, Magnesiumhydroxyd, Calciumhydroxid, Bariumhydroxid, Aluminiumhydrogenphosphat, Kainit, Bittersalz, u.s.w..

Die Dämmschichtbildner können gegebenenfalls noch übliche Zusätze, wie Flammhemmer, Bindemittel, Weichmacher, Dispergiermittel und Füllstoffe, wie beispielsweise Titandioxid als Weißpigment und Glasfasern als Verstärkungsmaterial, u.s.w. enthalten. Als Flammhemmer werden bevorzugt halogenfreie Flammhemmer, wie etwa Zinkborat, Ammoniumpolyphosphat, Borphosphat oder Ammoniumpentaborat verwendet.

Bevorzugt wird ein intumeszierender Dämmschichtbildner eingesetzt.

Das Auftragen der Dämmschichtbildner kann durch Streichen, Rakeln, Rollen, Spritzen, Tauchen oder Spachteln erfolgen.

Bevorzugt wird der Dämmschichtbildner in einer Dicke von 0,5 bis 4 mm aufgetragen.

Auf den Schaumstoff wird vor dem Auftragen des Dämmschichtbildners bevorzugt noch ein Gewebe oder Gitter oder Vlies aus Glasfasern, Keramikfasern oder Textilfasern aufgelegt.

Um die Brandwiderstandzeit der erfindungsgemäßen Sandwichplatten zu erhöhen, können mehrlagige Platten, bestehend beispielsweise aus Deckschicht, Schaumstoff, Dämmschichtbildner als Zwischenschicht, Schaumstoff und Deckschicht, hergestellt werden.

Die erfindungsgemäßen Sandwichplatten eignen sich als Feuerbarrieren, sogenannten Weichschotts. Insbesondere sind die erfindungsgemäßen Sandwichplatten für die Verwendung als großflächige Weichschotts oder als Türblatt für Brandschutztüren, als Trennwand für F 90 bis F 120 Brandwiderstandsdauer, als Deckenelement und Wandelement für Fertigbauhäuser, sowie für Luft-, Schienen-, Straßen- und Wasserfahrzeuge geeignet.

Beim Einbau der erfindungsgemäßen Sandwichplatten wird zur kraftbündigen Verbindung zu den tragenden Teilen des Gebäudes bevorzugt ein B1-Polyurethan(PUR)-Dosenschaumstoff verwendet.

Geeignete B1-PUR- Dosenschaumstoffe sind beispielsweise handelsübliche B1-PUR- Dosenschaumstoffe, wie etwa Promafoam C (Fa. Promat), Intumex FS-1 (Fa. Intumex), IIIfoam BS (Fa. IIIbruck), Ordocel PU C.F. +2H (Fa. PIC), u.s.w.

Die durch keine Deckschicht geschützten Flächen können nachträglich mit Dämmschichtbildner eingestrichen werden.

Die erfindungsgemäßen Sandwichplatten zeichnen sich durch im Vergleich zum Stand der Technik höheren Brandwiderstandzeiten, geringeres Gewicht, Eigensteifigkeit, Faserfreiheit und leichtere Verarbeitbarkeit aus.

Beispiel 1

In einer offenen Blockform mit den Abmessungen 2x1x1m wurde ein PIR-B1-Schaumstoff nach folgender Formulierung hergestellt:

| Teile | Einsatzstoffe |
|---|---|
| Komponente A | |
| 50,1 | Lupranol 3321 höherfunktionelles Polyätherpolyol (BASF) |
| 4,5 | Ricinusöl (Bayer) |
| 2,1 | Glycerin |
| 13,3 | Fyrol A 301 Chlorphosphat- Mischung (Akzo Nobel) |
| 0,5 | OS 710 Polyether Polysiloxan (Bayer) |
| 26,7 | n- Pentan (Haltermann) |
| 2,8 | HHT Tris-(dimethylaminopropyl)-s-triazin (BASF) |
| 100 | |

(fortgesetzt)

| Teile | Einsatzstoffe |
|---|---|
| Komponente B | |
| 84 | Lupranat M 20 Roh-MDI (BASF) |
| 7 | Lupranol 3321 |
| 0,1 | Benzoylchlorid |
| 8,9 | n-Pentan |
| Mischungsverhältnis 44 Teile A : 100 Teile B | |

Der Isocyanatindex betrug 260%

Die Komponenten wurden mit einem schnelllaufenden Rührwerk 15 Sekunden vermischt und 60 kg in die Form geleert. Die Steigzeit war nach 40 Sekunden beendet. Nach dem Durchhärten wurde entformt und der Block in 10 cm dicke Platten geschnitten, sodass eine 30x30x10 cm PIR-B1 Platte erhalten wurde.

Auf die PIR-Platte wurde ein grobmaschiges Glasgewebe mit Maschenweite 5mm und Flächengewicht 145 g/m$^2$ aufgelegt und mit einem intumeszierenden Anstrich versehen.

Nach dem Trocknen betrug die Trockenfilmdicke 1mm jeweils auf beiden Oberflächen.

Der verwendete intumeszierende Anstrich hatte folgende Zusammensetzung:

| Teile | Einsatzstoff | |
|---|---|---|
| 19 | Wasser | |
| 15 | Pentaerythrit (Perstorp) | |
| 5 | Titandioxid RN 59 (Kronros) | als anorg. Füllstoff |
| 19 | Exolit 422 (Clariant) | |
| 15 | Melamin (BASF) | |
| 24 | Mowilith DM 230 | als Bindemittel |
| 2 | Chlorparaffin CP 52 (Clariant) | als Weichmacher |

Beispiel 2:

Ein PIR-B1-Schaumstoff wurde unter Mitverwendung eines chlorhaltigen Polyesters, der aus einem Chlordiol, Bis-(Octachlorphenylhhydroxyethylamin, und Adipinsäure besteht, und einen Chlorgehalt von 45% aufweist hergestellt:

| Teile | Einsatzstoffe |
|---|---|
| A-Komponente | |
| 26,2 | Chlorpolyester (OHZ = 56) |
| 26,2 | Fyrol PCF Trischlorpropylphosphat (Akzo Nobel) |
| 1,6 | Silkonöl DC 193 (Dow Corning) |
| 3,9 | Tris(dimethylaminipropyl) hexahydro-s-triazin (BASF) |
| 21,0 | Lupranol 3501 (OHZ =430) (BASF) |
| 13,1 | Lupranol 3402 (OHZ =480) (BASF) |
| 5,4 | Trimethylolpropan |
| 1,9 | Ethylenglykol |
| 0,35 | Stabilisator OS 710 (Bayer) |
| 0,35 | Zusatzmittel SM (Bayer) |
| 100 | |
| B-Komponente | |
| 55,9 | Desmodur 44V20 (Bayer), MDI-Polymer NCO = 31%, Visk. = 200mPas |
| 22,9 | Desmodur 44V10 (Bayer), MDI-Polymer NCO = 31%, Visk. = 130mPas |
| 21,2 | n-Pentan (Haltermann) |

(fortgesetzt)

| Teile | Einsatzstoffe |
|---|---|
| B-Komponente | |
| Mischungsverhältnis: Komponente A: Komponente B = 100:235 | |

Der Isocyanatindex betrug 280%

Aus diesen Einsatzstoffen wurde ein PIR-B1-Schaumstoffblock hergestellt und in Platten geschnitten. sodass eine 30x30x10 cm PIR-B1 Platte erhalten wurde. Diese wurden wieder mit dem Glasgewebegitter belegt und mit einer ablativen Beschichtung in 1mm Stärke versehen.

Die ablative Beschichtung hatte folgende Zusammensetzung:

| Teile | Einsatzstoffe | |
|---|---|---|
| 30 | Wasser | |
| 35 | Primal 2620 Polyacrylat (Rohm und Haas) | als Bindemittel |
| 25 | Apyral 16 Aluminiumtrihydrat (VAW) | als Flammschutzmittel |
| 5 | Exolit 422 (Clariant) | als Flammschutzmittel |
| 2 | Titandioxid (Kronos) | als anorg. Füllstoff |
| 1 | Glasfasern | als Verstärkung |
| 0,5 | Pigmentverteiler A (BASF) | als Dispergiermittel |
| 26 | Zinkborat (Borax) | als Flammschutzmittel |
| 1 | Antifoam (Henkel) | als Entschäumer |

Beispiel 3:

322,2g (1mol) Benzophenontetracarbonsäuredianhydrid, 119g (0,6 mol) Methylendianilin und 44,4g (0,4 mol) m-Pyridindiamin wurden in Ethanol 2h rückflussgekocht. Anschließend wurde die Lösung sprühgetrocknet und das so erhaltene Pulver in eine Metallform gegeben und 30 Minuten bei 300°C erhitzt. Dabei vergrößerte die Schüttung ihr Volumen um das Vierfache und versinterte. Es wurde ein Polyimid(PI)schaumstoff mit einem Raumgewicht von 20 kg/$m^3$ erhalten.

Zur Beschichtung wurde ein Dämmschichtbildner gemäß Beispiel 1 verwendet.

Beispiel 4:

Die gemäß Beispiel 1 bis 3 hergestellten Platten wurden als Weichschott in eine 10 cm YTONG-Wand eingebaut. Die Fixierung erfolgte mit B1 Dosenschaum Intumex FS-1. Nach zwei Tagen wurden die ungeschützten Flächen ebenfalls mit 1mm Dämmschichtbildner beschichtet.

Zum Vergleich wurden 5 mm dicke Rockwool Dämmplatten RP-XV und 10 mm EPS-B1 Schaumstoffplatten ebenfalls mit intumeszierenden und ablativen Anstrichen versehen und als 30x 30 cm Blindschott eingebaut. (V1-V4) Nach 31 Tagen Lagerung bei Normalklima gemäß DIN 50014-23/50 wurden mit allen Einbauten Brandversuche nach ÖNORM 3800 durchgeführt.

An der feuerabgewandten Seite wurden die Temperaturen vermittels Thermoelementen gemessen und die Zeit bestimmt bis 180°C erreicht worden sind.

| Beispiel | Schaumstoff | RG | d | WDL | Deckschicht | Zeit bis 180°C |
|---|---|---|---|---|---|---|
| | | | (cm) | R ($m^2$.K/W) | | (min) |
| 1 | PIR-B-1 | 30g/l | 10 | 50 | 1mm intu. | 90 |
| 2 | PIR-B-1 | 35g/l | 10 | 50 | 1mm abl. | 70 |
| 3 | PI-B-1 | 20g/l | 10 | 55 | 1mm intu. | >90 |
| V1 | EPS-B-1 | 16g/l | 10 | 29 | 1 mm intu. | 30 |
| V2 | EPS-B-1 | 16g/l | 10 | 29 | 1mm abl. | 20 |
| V3 | Rockwool | 150g/l | 5 | 1,3 | 1mm intu. | 80 |
| V4 | Rockwool | 150g/l | 5 | 1,3 | 1 mm abl. | 75 |

(fortgesetzt)

| Beispiel | Schaumstoff | RG | d | WDL | Deckschicht | Zeit bis 180°C |
|---|---|---|---|---|---|---|
| | | | (cm) | R (m$^2$.K/W) | | (min) |

RG......Raumgewicht
d.........Dicke
WDL.....Wärmedurchlasswiderstand
intu........intumeszierend
abl.........ablativ

Der PIR-B-1 und PI-B1 intumeszierender Anstrich-Verbund waren hinsichtlich gewichtsspezifischen Brandwiderstands allen anderen Varianten überlegen:

$$\text{gewichtsspezifischen Brandwiderstand} = \frac{\text{Brandwiderstandzeit}}{\text{RG x d [m]}}$$

| Schaumstoff | gewichtspezifischer Brandwiderstand |
|---|---|
| | min.m$^2$/kg |
| PIR-B-1 intumeszierend | 30 |
| PIR-B-1 ablativ | 20 |
| PI-B-1 intumeszierend | 20 |
| EPS-B-1 intumeszierend | 19 |
| EPS-B-1 ablativ | 12,5 |
| Rockwool intumeszierend | 10,6 |
| Rockwool ablativ | 10 |

**Patentansprüche**

**1.** Schaumstoffenthaltende Verbundsysteme, **dadurch gekennzeichnet, dass** sie aus Polyisocyanurat-B1-, Polyisocyanuratimid-B1- oder Polyimid-B1-Schaumstoffen bestehen, die mit intumeszierenden oder ablativen Dämmschichtbildnern als Deckschicht und gegebenenfalls Zwischenschichten versehen sind.

**2.** Schaumstoffenthaltende Verbundsysteme nach Anspruch 1, **dadurch gekennzeichnet, dass** die eingesetzten Schaumstoffe Isocyanuratgruppen und/oder Imidgruppen aufweisen, wobei das Verhältnis von Isocyanuratgruppen:lmidgruppen von 0 bis 1 betragen kann.

**3.** Verfahren zur Herstellung von schaumstoffenthaltenden Verbundsystemen nach Anspruch 1, **dadurch gekennzeichnet, dass** Polyisocyanurat-B1-Schaumstoffe aus Diphenylmethan-4,4'-diisocyanat als Isocyanatkomponente und halogen- und/oder phosphorhaltigen Polyolen als Polyolkomponente, oder Polyisocyanuratimid-B1-Schaumstoffe aus Imidoisocyanaten als Isocyanatkomponente oder aus halogenund/oder phosphorhaltigen Polyolen mit Imidodiolen als Polyolkomponente, oder Polyimid-B1-Schaumstoffe aus Tetracarbonsäureanhydriden und aromatischen Diaminen hergestellt werden, die mit intumeszierenden oder ablativen Dämmschichtbildnern als Deckschicht und gegebenenfalls Zwischenschicht versehen werden.

**4.** Verfahren zur Herstellung von schaumstoffenthaltenden Verbundsystemen nach Anspruch 3, **dadurch gekennzeichnet, dass** als Polyolkomponente für Polyisocyanurat-Schaumstoffe halogen- und/oder phosphorhaltige Polyetherpolyole oder Umsetzungprodukte aus Dicarbonsäuren mit Phosphordiolen und/oder Chlordiolen oder deren Gemische und für Polyisocyanuratimid-Schaumstoffe halogenund/oder phosphorhaltige Polyetherpolyole oder Umsetzungprodukte aus Dicarbonsäuren mit Phosphordiolen und/oder Chlordiolen oder deren Gemische in Kombination mit Umsetzungsprodukten aus Tetracarbonsäureanhydriden und Aminoalkoholen als Imidodiol eingesetzt werden.

**5.** Verfahren zur Herstellung von schaumstoffenthaltenden Verbundsystemen nach einem der Ansprüche 3 bis 4, **dadurch gekennzeichnet, dass** die Polyisocyanurat und Polyisocyanuratimid-Schaumstoffe durch das One-shot-Verfahren, bei welchem Isocyanatkomponente und Polyolkomponente direkt vermischt werden, oder durch das zweistufige Prepolymerverfahren, bei welchem zuerst ein Präpolymer aus Diisocyanat und Polyol oder Tetracarbonsäureanhydrid gebildet wird, hergestellt werden.

**6.** Verfahren zur Herstellung von schaumstoffenthaltenden Verbundsystemen nach Anspruch 5, **dadurch gekennzeichnet, dass** die Polyisocyanurat- und Polyisocyanuratimid-Schaumstoffe durch das One-shot-Verfahren in Anwesenheit eines Polyisocyanurat-Katalysators hergestellt werden.

**7.** Verfahren zur Herstellung von schaumstoffenthaltenden Verbundsystemen nach einem der Ansprüche 3- 6, **dadurch gekennzeichnet, dass** der Polyolkomponente übliche Zusätze aus der Gruppe der Vernetzer, Kettenverlängerer, Emulgatoren, Treibmittel, Schaumstabilisatoren, Flammhemmer oder Füllstoffe und der Isocyanatkomponente übliche Zusätze aus der Gruppe der Treibmittel, Stabilisatoren, Polyole oder Tetracarbonsäureanhydride zur Präpolymerbildung zugesetzt werden.

**8.** Verfahren zur Herstellung von schaumstoffenthaltenden Verbundsystemen nach einem der Ansprüche 3- 7, **dadurch gekennzeichnet, dass** bei Polyisocyanurat und Polyisocyanuratimid-Schaumstoffen die Isocyanatkomponente und die Polyolkomponente in einem Verhältnis vermischt werden, sodass ein Isocyanatindex von mindestens 250% erhalten wird.

**9.** Verfahren zur Herstellung von schaumstoffenthaltenden Verbundsystemen nach einem der Ansprüche 3-8, **dadurch gekennzeichnet, dass** Schaumstoffe mit einem Raumgewicht von 15 bis 200g/l erhalten werden.

**10.** Verfahren zur Herstellung von schaumstoffenthaltenden Verbundsystemen nach Anspruch 3, **dadurch gekennzeichnet, dass** ein intumeszierender Dämmschichtbildner aus der Gruppe der intumeszierende Lacke aus Polyol, Ammoniumpolyphosphat und Amiden, intumeszierende Klarlacke aus Phosphorsäure-Polyolester und Hexamethylmethoxymelamin, die unter Feuereinwirkung aufschäumen, oder Wasserglas, oder V-Graphit haltige Kunststoffdispersionen, oder als ablativer Dämmschichtbildner flammhemmende, kühlende Anstriche mit einem hohen Gehalt an wasserabspaltenden Verbindungen aus der Gruppe Aluminiumhydroxyd, Magnesiumhydroxyd, Calciumhydroxyd, Bariumhydroxyd, Aluminiumhydrogenphosphat, Kainit oder Bittersalz auf den Schaumstoff aufgetragen wird.

**11.** Verfahren zur Herstellung von schaumstoffenthaltenden Verbundsystemen nach Anspruch 3, **dadurch gekennzeichnet, dass** der Dämmschichtbildner in einer Dicke von 0,5 bis 4 mm aufgetragen wird.

**11.** Verfahren zur Herstellung von schaumstoffenthaltenden Verbundsystemen nach Anspruch 3, **dadurch gekennzeichnet, dass** vor dem Auftragen des Dämmschichtbildners ein Gewebe oder Gitter aus Glasfasern, Keramikfasern oder Textilfasern auf den Schaumstoff aufgelegt wird.

**12.** Verwendung von schaumstoffenthaltenden Verbundsystemen nach Anspruch 1, als großflächige Weichschotts, als Türblatt für Brandschutztüren, als Trennwand für F 90 bis F 120 Brandwiderstandsdauer, als Deckenelement und Wandelement für Fertigbauhäuser, sowie bei Luft-, Schienen-, Straßen- und Wasserfahrzeugen.

**13.** Verwendung von schaumstoffenthaltenden Verbundsystemen nach Anspruch 12, **dadurch gekennzeichnet, dass** beim Einbau der schaumstoffenthaltenden Verbundsysteme zur kraftbündigen Verbindung zu den tragenden Teilen von Gebäuden ein B1-Polyurethan-Dosenschaumstoff verwendet wird.

**Europäisches Patentamt**

# EUROPÄISCHER RECHERCHENBERICHT

Nummer der Anmeldung

EP 03 00 4615

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 891 860 A (PROMAT FIRE PROTECTION LIMITED) 20. Januar 1999 (1999-01-20) | 1,12 | B32B27/40 C08G18/76 |
| Y | * Spalte 2, Zeile 4-6-10-31-41-42; Ansprüche 1,3,4; Abbildung 1 * | 3,10,11 | C08G73/10 C08G18/46 |
| | --- | | |
| Y,D | EP 0 832 735 A (WOLMAN GMBH DR) 1. April 1998 (1998-04-01) * Seite 2, Zeile 56 - Seite 3, Zeile 9-25-33; Ansprüche 1,5,6,9; Beispiele 1,2 * | 1,10-12 | |
| | --- | | |
| X | GB 1 598 197 A (ICI LTD) 16. September 1981 (1981-09-16) | 1 | |
| Y | * Seite 2, Zeile 13-18-31-36-40-124-129 - Seite 3, Zeile 9,10; Ansprüche 1,2,17; Beispiele 1,2 * * Seite 4, Zeile 3,4 * | 3,10-12 | |
| | --- | | |
| X | GB 1 203 461 A (ICI LTD.) 26. August 1970 (1970-08-26) | 1 | |
| Y | * Seite 2, Zeile 19-53,62-68,106-114 - Seite 4, Zeile 2,3; Ansprüche 1-5 * | 3,11,12 | **RECHERCHIERTE SACHGEBIETE (Int.Cl.7)** |
| | --- | | B32B C08G |
| Y | GB 1 404 822 A (ICI LTD) 3. September 1975 (1975-09-03) * Seite 4, Zeile 53-57,89; Ansprüche 1,8,11; Beispiel 1 * | 1 | |
| | --- | | |
| Y | EP 0 095 530 A (DOW CHEMICAL EUROP) 7. Dezember 1983 (1983-12-07) * Seite 1, Zeile 14-26 - Seite 6, Zeile 18-26; Ansprüche 1,21,25; Beispiel 6 * * Seite 27, Zeile 32-35 - Seite 28, Zeile 12-16; Beispiel 6 * * Seite 8, Zeile 11-19 * | 1,3, 10-12 | |
| | --- | | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 19. Juli 2003 | Derz, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder · nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

Europäisches
Patentamt

**EUROPÄISCHER RECHERCHENBERICHT**

Nummer der Anmeldung

EP 03 00 4615

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | EP 0 402 022 A (ICI GMBH) 12. Dezember 1990 (1990-12-12) * Seite 7, Zeile 47-53 - Seite 6, Zeile 11,12 * | 1 | |
| A | * Seite 9, Zeile 34,35; Ansprüche 1,6,8,10; Beispiele 2,3 * --- | 9 | |
| Y | EP 0 189 983 A (IMI TECH CORP) 6. August 1986 (1986-08-06) * Seite 1, Absatz 3 - Seite 2, Absatz 2; Anspruch 1 * ----- | 1,12 | |
| | | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| DEN HAAG | 19. Juli 2003 | Derz, T |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

 
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.  EP 03 00 4615

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-07-2003

| Im Recherchenbericht angeführtes Patentdokument | | Datum der Veröffentlichung | Mitglied(er) der Patentfamilie | | Datum der Veröffentlichung |
|---|---|---|---|---|---|
| EP 0891860 | A | 20-01-1999 | EP | 0891860 A2 | 20-01-1999 |
| EP 0832735 | A | 01-04-1998 | DE | 19639842 A1 | 02-04-1998 |
| | | | DE | 19652352 A1 | 18-06-1998 |
| | | | EP | 0832735 A2 | 01-04-1998 |
| GB 1598197 | A | 16-09-1981 | AU | 525377 B2 | 04-11-1982 |
| | | | AU | 3678778 A | 06-12-1979 |
| | | | NZ | 187398 A | 25-10-1979 |
| GB 1203461 | A | 26-08-1970 | KEINE | | |
| GB 1404822 | A | 03-09-1975 | BE | 816518 A1 | 18-12-1974 |
| | | | DE | 2428307 A1 | 08-01-1976 |
| | | | FR | 2276334 A1 | 23-01-1976 |
| | | | JP | 50159593 A | 24-12-1975 |
| | | | AU | 5546373 A | 14-11-1974 |
| EP 0095530 | A | 07-12-1983 | EP | 0095530 A1 | 07-12-1983 |
| | | | AT | 26724 T | 15-05-1987 |
| | | | AU | 564153 B2 | 06-08-1987 |
| | | | AU | 1492683 A | 08-12-1983 |
| | | | BR | 8303004 A | 31-01-1984 |
| | | | CA | 1210896 A1 | 02-09-1986 |
| | | | DE | 3276117 D1 | 27-05-1987 |
| | | | DK | 247983 A | 02-12-1983 |
| | | | ES | 8503697 A1 | 16-06-1985 |
| | | | FI | 831968 A ,B, | 02-12-1983 |
| | | | JP | 59025811 A | 09-02-1984 |
| | | | NO | 831955 A ,B, | 02-12-1983 |
| | | | NZ | 204401 A | 10-09-1986 |
| EP 0402022 | A | 12-12-1990 | EP | 0402022 A1 | 12-12-1990 |
| | | | JP | 3103418 A | 30-04-1991 |
| EP 0189983 | A | 06-08-1986 | US | 4562112 A | 31-12-1985 |
| | | | US | 4576862 A | 18-03-1986 |
| | | | CA | 1285696 C | 02-07-1991 |
| | | | DE | 3678457 D1 | 08-05-1991 |
| | | | EP | 0189983 A2 | 06-08-1986 |
| | | | JP | 1872502 C | 26-09-1994 |
| | | | JP | 5085577 B | 08-12-1993 |
| | | | JP | 61219635 A | 30-09-1986 |
| | | | JP | 2575279 B2 | 22-01-1997 |
| | | | JP | 6157810 A | 07-06-1994 |

EPO FORM P0461

Für nähere Einzelheiten zu diesem Anhang : siehe Amtsblatt des Europäischen Patentamts, Nr. 12/82